# EUROPÄISCHE PATENTSCHRIFT

(11) **EP 2 841 216 B1**
(45) Veröffentlichungstag und Bekanntmachung des Hinweises auf die Patenterteilung: **18.11.2015**
(21) Anmeldenummer: 13719068.2
(22) Anmeldetag: 22.04.2013
(51) Int. Cl.: B21B 39/00, B21B 13/14

(54) **STÜTZROLLE**
SUPPORT ROLLER
ROULEAU D'APPUI

(30) Priorität: 26.04.2012 DE 102012206905
(43) Veröffentlichungstag der Anmeldung: 04.03.2015
(73) Patentinhaber: SMS group GmbH, 40237 Düsseldorf (DE)
(72) Erfinder: ARTEL, Jens, 57399 Kirchhundem (DE); BREUER, Michael, 57271 Hilchenbach (DE); KIPPING, Matthias, 57562 Herdorf (DE); JEPSEN, Olaf, Norman, 57072 Siegen (DE); HAUSMANN, Olaf, 47249 Duisburg (DE)
(74) Vertreter: Klüppel, Walter
(86) Internationale Anmeldenummer: PCT/EP2013/058301
(87) Internationale Veröffentlichungsnummer: WO 2013/160254

(56) Entgegenhaltungen:
- DE-A1- 2 651 028
- DE-A1- 10 128 999

## Beschreibung

### Gebiet der Erfindung

Die vorliegende Erfindung betrifft eine Stützrolle für Walz-, Gieß- oder Richtanlagen zur Herstellung oder Bearbeitung von Metallprodukten, wie Bändern, Blechen, Profilen oder sonstigen Teilen.

### Stand der Technik

Stützrollen aus dem obigen Gebiet sind vielfach bekannt und werden häufig zwei- oder dreireihig ausgebildet, wobei eine Rollenachse feststehend in einem Lagerblock gelagert wird und um diese Rollenachse herum ein, über Wälzkörper drehbar gelagerter Außenring vorgesehen wird.

Die DE 26 51 028 beschreibt ein Walzgerüst mit Stützwalzen, die hydrostatische Stützelemente aufweisen. Der Oberbegriff von Anspruch 1 basiert auf diesem Dokument.

Aus der DE 101 28 999 A1 ist eine Rollgangsrolle, insbesondere für den Transport von ofenwarmem, metallischem Bandmaterial, Gießsträngen aus Stahl und dergleichen bekannt.

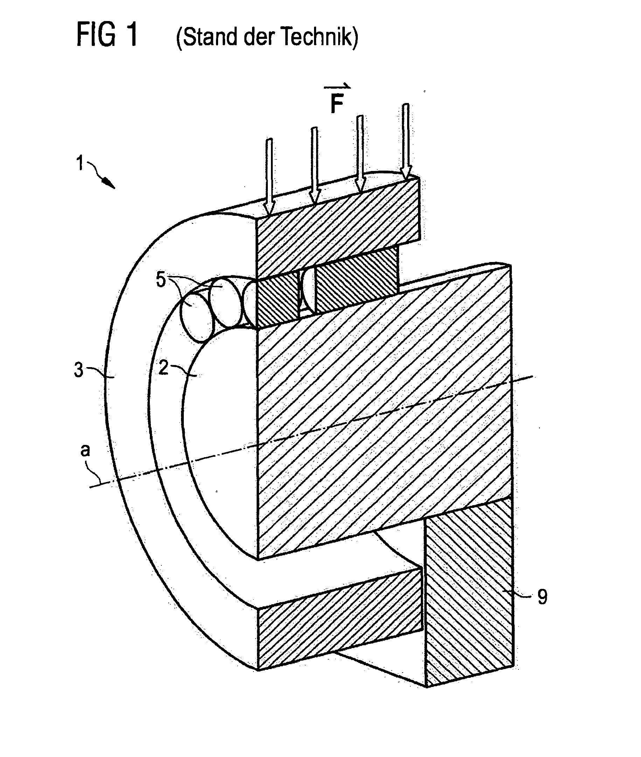

Eine bekannte Anordnung ist auch schematisch in Figur 1 dargestellt. Die gezeigte Anordnung umfasst eine in einem Lagerblock 9 gelagerte Stützrolle 1, welche die Rollenachse 2 mit einer Mittelachse a sowie mehreren Wälzkörpern 5 und einen entsprechenden Außenring 3 umfasst, welcher in Kontakt mit einem Metallprodukt oder einer Walze stehen kann. Eine über das Metallprodukt oder die Walze auf die Wälzkörper wirkende Belastung bzw. Lasteinleitung ist durch die Linienkraft F dargestellt. Diese Kraft kann zum Beispiel die Folge eines

Richtvorganges in einer Richtmaschine sein oder aber auch lediglich durch das Eigengewicht des Metallproduktes resultieren. Die Lage der Lasteinleitungsstelle bzw. des Lasteinleitungspunkts ist im Allgemeinen nicht auf die dargestellte vertikale Position beschränkt. Lasten können auch in anderen Winkeln auf eine Stützrolle bzw. auf deren Umfang wirken.

Nachteilig an der gezeigten Anordnung ist, dass die Wälzkörper gerade im Scheitelpunkt einer sehr großen Belastung unterliegen. Insbesondere ist zu gewissen Zeitpunkten nur ein Wälzkörper einer Reihe, welcher sich in Scheitelstellung befindet, maximal belastet.

Daraus resultiert ein höchst ungleichmäßiges Tragverhalten der Wälzkörper einer Wälzkörperreihe. Der Wälzkörper in Scheitelstellung trägt aufgrund der eingebrachten Linienlast am Außenring etwa bis zu 50% der Last, welche von der entsprechenden Reihe aufgenommen wird.

Dies hat zur Folge, dass die (dynamische) Tragzahl und die Lebensdauer der Stützrolle herabgesetzt werden.

Insbesondere treten in Richtmaschinen entlang der Rollenachse ungleichmäßige Kräfte auf, durch die einzelne Wälzkörper besonders im Vergleich zu ihren in Längsrichtung benachbarten Wälzkörpern stark belastet werden.

Angesichts dieses Stands der Technik stellt sich die technische Aufgabe, eine Stützrolle bereitzustellen, bei der die (dynamische) Tragzahl und/oder die Lebensdauer erhöht bzw. optimiert werden.

Ferner soll bevorzugt mindestens einer der oben genannten Nachteile überwunden werden.

### Offenbarung der Erfindung

Zur Lösung der technischen Aufgabe umfasst die vorliegende Erfindung eine Stützrolle gemäß Anspruch 1.

Durch die erfindungsgemäße Anordnung wird der Rollenachse eine Elastizität verliehen, durch die die belasteten Wälzkörper in Scheitelstellung einer Last ausweichen können. Insbesondere wird eine auf einen Wälzkörper wirkende Last sowohl in Längsrichtung der Rollenachse als auch in deren Umfangsrichtung besser auf benachbarte Wälzkörper verteilt. Die Lebensdauer und die dynamische Tragzahl der Stützrolle werden erhöht und der Verschleiß der Wälzlagerung gemindert. Insbesondere wird eine auf den Außenring wirkende Linienlast nun besser auf die verschiedenen Wälzkörper einer Wälzkörperreihe verteilt.

Im Allgemeinen werden die Wälzkörper bevorzugt in mehreren, in Richtung der Mittelachse der Rollenachse nebeneinander liegenden Wälzkörperreihen angeordnet. Die Rollenachse bezeichnet einen zylindrischen Körper mit kreisförmigem Querschnitt.

Ein Bereitstellen einer Vielzahl von hochwertigeren oder verschleißfesteren Wälzkörpern ist nicht mehr zwingend notwendig. Allein durch das Vorsehen eines Hohlraums in der Rollenachse werden die Lastverteilung und die Haltbarkeit stark verbessert. Andererseits ist es ebenfalls möglich, sehr hochwertige und verschleißfeste Wälzkörper zu verwenden, um die Haltbarkeit der Vorrichtung zu maximieren.

Der Begriff "Metallprodukt" meint insbesondere Metallbänder, Bleche, Profile oder andere Metallteile.

Gemäß einer bevorzugten Ausführungsform der Stützrolle erstreckt sich der Hohlraum über mindestens 80 % der Länge der Rollenachse. Der Hohlraum kann sich insbesondere auch über die gesamte Länge der Rollenachse erstrecken.

Gemäß der Erfindung ist der Hohlraum als eine Bohrung ausgebildet, welche sich im Wesentlichen parallel zu der Mittelachse der Rollenachse erstreckt. Wird eine Bohrung vorgesehen, kann in nur einem Arbeitsschritt (nämlich dem Bohren) eine deutliche Verbesserung der Haltbarkeit der Stützrolle erreicht werden.

Gemäß einer weiteren bevorzugten Ausführungsform der Stützrolle befindet sich die Mittelachse der Bohrung im Wesentlichen in einer durch den Lasteinleitungspunkt und der Mittelachse der Rollenachse aufgespannten Ebene. Gerade in diesem Bereich ist die Belastung der Wälzlager am größten.

Gemäß einer weiteren bevorzugten Ausführungsform der Stützrolle weist die Bohrung einen Durchmesser auf, welcher zwischen 50% und 95% und bevorzugt zwischen 75% und 90% des Radius der Rollenachse entspricht.

Gemäß einer weiteren bevorzugten Ausführungsform der Stützrolle, beträgt die oberhalb der Bohrung (bzw. die in Richtung der Lasteinleitung) verbleibende Wandstärke der Rollenachse mindestens 5% und vorzugsweise mindestens 10% des Radius der Rollenachse.

Gemäß einer weiteren bevorzugten Ausführungsform der Stützrolle beträgt die oberhalb der Bohrung (bzw. die in Richtung der Lasteinleitung) verbleibende (und an die Bohrung angrenzende) Wandstärke der Rollenachse höchstens 50% und vorzugsweise höchstens 25% des Radius der Rollenachse.

Die genannten Bereiche können einen guten Kompromiss aus Belastbarkeit und Elastizität darstellen.

Gemäß einer weiteren bevorzugten Ausführungsform der Stützrolle sind die Wälzkörper als Kugel- oder Zylinderelemente ausgebildet.

Gemäß einer weiteren bevorzugten Ausführungsform der Stützrolle weisen der Außenring und/oder die Wälzkörper jeweils eine Querschnittsdicke zwischen 20% und 50% und vorzugsweise zwischen 25% und 40% des Durchmessers der Rollenachse auf.

Gemäß einer weiteren bevorzugten Ausführungsform der Stützrolle umfasst diese weiterhin einen Innenring zwischen der Rollenachse und den Wälzkörpern zum Schutz der Rollenachse vor mechanischem Abrieb. Bevorzugt kann der Innenring eine maximale Querschnittsdicke von weniger als 20% und bevorzugt von weniger als 10% des Radius der Rollenachse aufweisen.

Ferner umfasst die vorliegende Erfindung eine Rollenanordnung, insbesondere für Walzwerksanlagen oder Einrichtungen zum Gießen, Befördern oder Richten von Metallprodukten. Eine solche Rollenanordnung umfasst zum einen eine erfindungsgemäße Stützrolle und zum anderen Mittel zur Lagerung der Stützrolle. Solche Mittel können mindestens einen Lagerblock (vorzugsweise mindestens zwei Lageblöcke) umfassen. Insbesondere kann die Rollenachse grundsätzlich feststehend (nichtdrehbar) durch die Mittel oder den Lagerblock gelagert sein.

Darüber hinaus umfasst die Erfindung eine Richt-, Gieß- oder Walzmaschine mit mindestens einer Stützrolle oder Rollenanordnung gemäß einer der obigen Ausführungsformen.

Schließlich umfasst die Erfindung auch ein Verfahren zur Herstellung einer Stützrolle, umfassend die Schritte des Bereitstellens einer Rollenachse, des Einbringens einer exzentrischen Bohrung in die Rollenachse und des Zusammenfügens von Rollenachse, Wälzkörpern und einem hohlzylinderförmigen Außenring zu der Stützrolle. Dabei bilden die Wälzkörper (in Reihen) zwischen dem Außenring und der Rollenachse eine drehbare Lagerung.

Die oben beschriebenen Ausführungsformen und ihre Merkmal können miteinander kombiniert oder gegeneinander ausgetauscht werden.

### Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen.

Es zeigen:
- Figur 1:: einen schematischen, perspektivischen Teilquerschnitt einer Stützrolle gemäß dem Stand der Technik; und
- Figur 2: einen schematischen, perspektivischen Teilquerschnitt einer Stützrolle gemäß einem erfindungsgemäßen Ausführungsbeispiel.

### Detaillierte Beschreibung der Ausführungsbeispiele

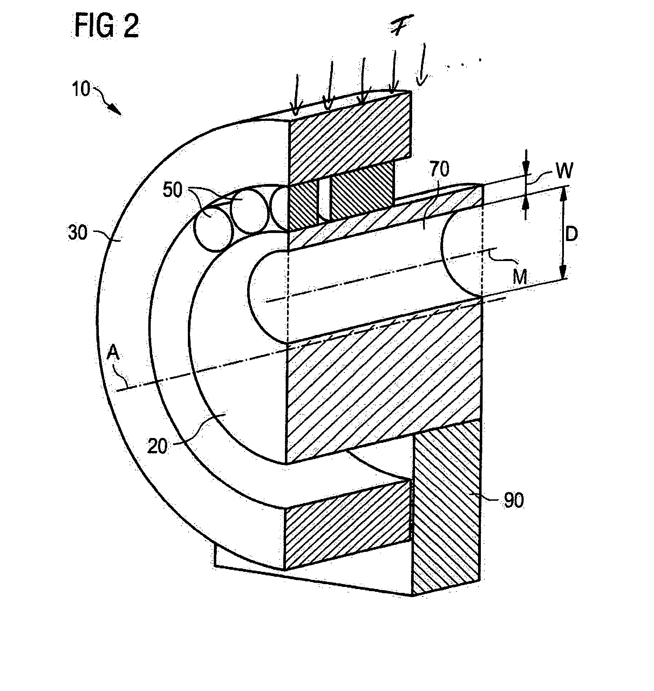

Die sich auf den Stand der Technik beziehende Figur 1 wurde bereits eingangs beschrieben. Figur 2 zeigt eine, in einem Lagerblock 90 gelagerte Stützrolle 10. Ähnlich wie die in Figur 1 dargestellte Stützrolle 1 umfasst die Stützrolle 10 eine Rollenachse 20, einen Außenring 30 sowie zwischen dem Außenring 30 und der Rollenachse 20 befindliche Wälzkörper 50. Diese sind bevorzugt in mehreren (nebeneinanderliegenden) Reihen angeordnet. Die Rollenachse 20 umfasst dabei eine Mittelachse A, oberhalb der ein Hohlraum 70 vorgesehen ist. Bevorzugt umfasst der Hohlraum 70 (senkrecht zur Mittel- bzw. Rollenachse) einen runden Querschnitt. Der Querschnitt kann jedoch auch oval oder vieleckig ausgebildet sein. Auch mehrere Hohlräume oder parallel angeordnete Bohrungen 70 sind möglich. Die Erfindung ist nicht auf Hohlräume bzw. Bohrungen 70 beschränkt, welche sich oberhalb der Mittelachse A befinden. Vielmehr sind die Hohlräume bzw. Bohrungen 70 bevorzugt derart angeordnet, dass sie im Wesentlichen zwischen einer Stelle der Lasteinleitung auf die Rolle 10 und der Mittelachse A angeordnet sind. Eine solche Last kann zum Beispiel durch eine andere Walze, eine andere Rolle oder durch ein Metallprodukt, insbesondere ein zu richtendes Metallprodukt auf die Stützrolle 10 wirken.

Wie üblich ist die Rollenachse 20 bevorzugt feststehend in den Lagerblöcken 90 gelagert. Die Rollenachsen und die sonstigen Elemente der Stützrolle oder Stützrollenanordnung samt Lagerblock 90 können bevorzugt Großteils aus Stahl oder Stahllegierungen gefertigt sein.

Generell kann vor allem im Betrieb der Stützrolle 10 auf den Umfang der Stützrolle 10 eine Last bzw. Kraft F wirken. Der Umfang der Stützrolle bzw. des Außenrings kann zum Beispiel ebenfalls als zylinderförmiger Mantel beschrieben werden. Ungleichmäßige Lastverteilungen können insbesondere im Bereich einer Richtmaschine auftreten.

Durch das Einbringen einer Bohrung bzw. eines Hohlraums 70 in die Rollenachse 20 kann eine solche Last F besser durch die Wälzkörper 50 auf die Rollenachse 20 oder einen zusätzlichen Innenring zwischen den Wälzkörpern 50 und der Rollenachse 20 verteilt werden.

Generell kann zudem eine auf einen Wälzkörper 50 wirkende Last durch die Ausbildung des Hohlraums 70 besser auf die ihn umgebenden Wälzkörper 50 abgeleitet werden (sowohl in Umfangsrichtung der Rolle als auch axial).

Bevorzugt ist es im Allgemeinen ebenfalls möglich, das Profil der Rollenachse 20 in axialer Richtung zu variieren. Das heißt, dass zum Beispiel die Rollenachse 20 in einem Mittenbereich (in axialer Richtung gesehen) vorzugsweise mit einem größeren Querschnitt, aber auch wahlweise mit einem geringeren Querschnitt ausgebildet werden kann als an axial außen gelegenen Bereichen der Rollenachse 20.

Bevorzugte relative Durchmesser des Außenrings 30, der Wälzkörper 50 und der Rollenachse 20 wurden bereits in der Offenbarung der Erfindung aufgeführt.

Schließlich kann der Fachmann einzelne Merkmale der Erfindung oder ihrer Ausführungsformen zur Anpassung an vorhandene Gegebenheiten anpassen.

### Bezugszeichenliste

- 1: Stützrolle
- 2: Rollenachse
- 3: Außenring
- 5: Wälzkörper
- 9: Lagerblock
- 10: Stützrolle
- 20: Rollenachse
- 30: Außenring
- 50: Wälzkörper
- 70: Hohlraum / Bohrung
- 90: Lagerblock
- a: Mittelachse der Rollenachse
- A: Mittelachse der Rollenachse
- D: Durchmesser des Hohlraums / der Bohrung
- F: Kraft / Lasteinleitung auf den Umfang der Stützrolle
- M: Mittelachse der Bohrung
- W: kleinste Wandstärke der Rollenachse in Richtung der Lasteinleitungsstelle

## Patentansprüche

1. Eine Stützrolle (1, 10), insbesondere für Walzwerksanlagen oder Einrichtungen zum Gießen, Befördern oder Richten von Metallprodukten, umfassend:
eine im Wesentlichen zylinderförmige Rollenachse (2, 20);
einen konzentrisch zu der Rollenachse (2, 20) angeordneten hohlzylinderförmigen Außenring (3, 30); und
eine Vielzahl von zwischen der Rollenachse (2, 20) und dem Außenring (3, 30) angeordneten Wälzkörpern (5, 50);
wobei die Rollenachse (20) zumindest abschnittsweise einen zu ihrer Mittelachse (A) exzentrisch angeordneten Hohlraum (70) umfasst, welcher im Wesentlichen zwischen der Mittelachse (A) und einer Stelle einer Lasteinleitung (F) auf den Umfang der Stützrolle (1, 10) anordbar ist,
**dadurch gekennzeichnet, dass**
der Hohlraum (70) als eine Bohrung (70) ausgebildet ist, welche sich im Wesentlichen parallel zu der Mittelachse (A) der Rollenachse (20) erstreckt.

2. Die Stützrolle gemäß Anspruch 1, wobei sich der Hohlraum (70) parallel zur Mittelachse (A) der Rollenachse (20) zumindest über die Länge der Vielzahl der Wälzkörper (5, 50) erstreckt und / oder sich über mindestens 40%, vorzugsweise mindestens über 80% der Länge der Rollenachse (20) erstreckt.

3. Die Stützrolle gemäß Anspruch 1, wobei sich die Mittelachse (M) der Bohrung (70) im Wesentlichen in einer zwischen der Lasteinleitungsstelle und der Mittelachse (A) der Rollenachse (20) aufgespannten Ebene befindet.

4. Die Stützrolle gemäß Anspruch 1 oder 3, wobei die Bohrung (70) einen Durchmesser (D) aufweist, welcher zwischen 50% und 95%, bevorzugt zwischen 75% und 90% des Radius der Rollenachse (20) beträgt.

5. Die Stützrolle gemäß einem der Ansprüche 3 bis 4, wobei die in Richtung der Lasteinleitungsstelle neben der Bohrung (70) geringste verbleibende Wandstärke (W) der Rollenachse (20) mindestens 5%, vorzugsweise mindestens 10% des Radius der Rollenachse (20) beträgt.

6. Die Stützrolle gemäß einem der Ansprüche 3 bis 5, wobei die in Richtung der Lasteinleitungsstelle neben der Bohrung (70) geringste verbleibende Wandstärke (W) der Rollenachse (20) höchstens 50% und vorzugsweise höchstens 25% des Radius der Rollenachse (20) beträgt.

7. Die Stützrolle gemäß einem der vorhergehenden Ansprüche, wobei die Wälzkörper (50) als Kugel- oder Zylinderelemente (50) ausgebildet sind.

8. Die Stützrolle gemäß einem der vorhergehenden Ansprüche, wobei der Außenring (30) und/oder die Wälzkörper (50) jeweils eine Querschnittsdicke zwischen 20% und 50%, vorzugsweise zwischen 25% und 40% des Durchmessers der Rollenachse (20) aufweisen.

9. Die Stützrolle gemäß einem der vorhergehenden Ansprüche, weiterhin umfassend:
einen zwischen der Rollenachse (20) und den Wälzkörpern (50) angeordneten Innenring zum Schutz der Rollenachse (20) vor mechanischem Abrieb.

10. Die Stützrolle gemäß Anspruch 10, wobei der Innenring eine maximale Querschnittsdicke von weniger als 20%, bevorzugt weniger als 10% des Radius der Rollenachse (20) aufweist.

11. Eine Rollenanordnung, insbesondere für Walzwerksanlagen oder Einrichtungen zum Gießen, Befördern oder Richten von Metallprodukten, umfassend:
eine Stützrolle (10) gemäß einem der vorhergehenden Ansprüche; und
Mittel zur Lagerung der Stützrolle (10), welche vorzugsweise einen Lagerblock (90) umfassen.

12. Die Rollenanordnung gemäß Anspruch 11, wobei die Rollenachse (20) durch die Mittel zur Lagerung feststehend gelagert ist.

13. Eine Richt-, Gieß- oder Walzmaschine, umfassend mindestens eine Stützrolle (10) oder Rollenanordnung gemäß einem der vorhergehenden Ansprüche.

14. Ein Verfahren zur Herstellung einer Stützrolle (10) gemäß einem der Ansprüche 1 bis 10 umfassend die Schritte:
Bereitstellen einer Rollenachse (20);
Einbringen einer exzentrischen Bohrung (70) in die Rollenachse (20), wobei sich die Bohrung (70) im Wesentlichen parallel zu der Mittelachse (A) der Rollenachse (20) erstreckt; und
Zusammenfügen der Rollenachse (20), von Wälzkörpern (50) und einem hohlzylinderförmigen Außenring (30) zu der Stützrolle (10), wobei die Wälzkörper (50) zwischen dem Außenring (30) und der Rollenachse (20) eine drehbare Lagerung bilden.

## Claims

1. A backing roll (1, 10), particularly for rolling mills or equipment for casting, transporting or straightening metal products, comprising:
a substantially cylindrical roll axle (2, 20);
a hollow-cylindrical outer ring (3, 30) arranged concentrically with respect to the roll axle (2, 20); and
a plurality of roll bodies (5, 50) arranged between the roll axle (2, 20) and the outer ring (3, 30);
wherein the roll axle (2) has at least in a section a cavity (70) which is arranged eccentrically with respect to the centre axis (A) thereof and which can be arranged between the centre axis (A) and a point of introduction of load (F) at the circumference of the backing roll (12, 10),
**characterised in that**
the cavity (70) is formed as a bore (70) which extends substantially parallel to the centre axis (A) of the roll axle (20).

2. The backing roll according to claim 1, wherein the cavity (70) extends parallel to the centre axis (A) of the roll axle (20) at least over the length of the plurality of roll bodies (5, 50) and/or over at least 40%, preferably at least 80%, of the length of the roll axle (20).

3. The backing roll according to claim 1, wherein the centre axis (M) of the bore (70) is disposed substantially in a plane extending between the load introduction point and the centre axis (A) of the roll axle (20).

4. The backing roll according to claim 1 or 3, wherein the bore (70) has a diameter (D) of between 50% and 95%, preferably between 75% and 90%, of the radius of the roll axle (20).

5. The backing roll according to one of claims 3 and 4, wherein the smallest wall thickness (W) of the roll axle (20) remaining near the bore (70) in the direction of the force introduction point is at least 5%, preferably at least 10%, of the radius of the roll axle (20).

6. The backing roll according to any one of claims 3 to 5, wherein the smallest wall thickness (W) of the roll axle (20) remaining near the bore (70) in the direction of the force introduction point is at most 50% and preferably at most 25% of the radius of the roll axle (20).

7. The backing roll according to any one of the preceding claims, wherein the roll bodies (5) are formed as spherical or cylindrical elements (50).

8. The backing roll according to any one of the preceding claims, wherein the outer ring (30) has and/or the roll bodies (5) each have a cross-sectional thickness of between 20% and 50%, preferably between 25% and 40%, of the diameter of the roll axle (20).

9. The backing roll according to any one of the preceding claims, further comprising:
an inner ring, which is arranged between the roll axle (20) and the roll bodies (50), for protecting the roll axle (20) from mechanical abrasion.

10. The backing roll according to claim 10, wherein the inner ring has a maximum cross-sectional thickness of less than 20%, preferably less than 10%, of the radius of the roll axle (20),

11. A roll arrangement, particularly for rolling mills or equipment for casting, transporting or straightening metal products, comprising:
a backing roll (10) according to any one of the preceding claims; and
means for mounting the backing roll (10), which means preferably comprise a bearing block (90).

12. The roll arrangement according to claim 11, wherein the roll axle (20) is mounted in stationary position by the means for mounting.

13. A straightening, casting or rolling machine, comprising at least one backing roll (10) or roll arrangement according to any one of the preceding claims.

14. A method of producing a backing roll (10) according to any one of claims 1 to 10, comprising the steps of:
providing a roll axle (20);
forming an eccentric bore (70) in the roll axle (20), wherein the bore (70) extends substantially parallel to the centre axis (A) of the roll axle (20); and
combining the roll axle (20), roll bodies (50) and a hollow-cylindrical outer ring (30) to form the backing roll (10), wherein the roll bodies (50) form a rotatable mounting between the outer ring (30) and the roll axle (20).

## Revendications

1. Rouleau d'appui (1, 10), en particulier pour des installations de laminoirs ou des équipements pour la coulée, le transport ou le dressage de produits métalliques, comprenant :
un axe de rouleau essentiellement cylindrique (2, 20) ;
un anneau externe (3, 30) en forme de cylindre creux disposé en position concentrique par rapport à l'axe de rouleau (2, 20) ; et
un certain nombre de corps roulants (5, 50) disposés entre l'axe de rouleau (2, 20) et l'anneau externe (3, 30) ;
dans lequel l'axe de rouleau (20) comprend au moins par sections un espace creux (70) disposé en position excentrique par rapport à son axe médian (A), qui peut venir se disposer essentiellement entre l'axe médian (A) et un endroit correspondant à une entrée de charge (F) sur la circonférence du rouleau d'appui (1, 10),
**caractérisé en ce que** l'espace creux (70) est réalisé sous la forme d'un alésage (70) qui s'étend essentiellement parallèlement à l'axe médian (A) de l'axe de rouleau (20).

2. Rouleau d'appui selon la revendication 1, dans lequel l'espace creux (70) s'étend parallèlement à l'axe médian (A) de l'axe de rouleau (20) au moins sur la longueur desdits plusieurs corps roulants (5, 50) et/ou s'étend sur au moins 40 %, de préférence sur au moins 80 % de la longueur de l'axe de rouleau (20).

3. Rouleau d'appui selon la revendication 1, dans lequel l'axe médian (M) de l'alésage (70) se trouve essentiellement dans un plan qui s'étend entre l'endroit correspondant à une entrée de charge et l'axe médian (A) de l'axe de rouleau (20).

4. Rouleau d'appui selon la revendication 1 ou 3, dans lequel l'alésage (70) présente un diamètre (D) qui représente entre 50 % et 95 %, de préférence entre 75 % et 90 % du rayon de l'axe de rouleau (20).

5. Rouleau d'appui selon l'une quelconque des revendications 3 à 4, dans lequel l'épaisseur de paroi (W) de l'axe de rouleau (20), la plus minime qui subsiste dans la direction de l'endroit correspondant à l'entrée de charge à côté de l'alésage (70), représente, au moins 5 %, de préférence au moins 10 % du rayon de l'axe de rouleau (20).

6. Rouleau d'appui selon l'une quelconque des revendications 3 à 5, dans lequel l'épaisseur de paroi (W) de l'axe de rouleau (20), la plus minime qui subsiste dans la direction de l'endroit correspondant à l'entrée de charge à côté de l'alésage (70), représente au maximum 50 % et de préférence au maximum 25 % du rayon de l'axe de rouleau (20).

7. Rouleau d'appui selon l'une quelconque des revendications précédentes, dans lequel les corps roulants (50) sont réalisés sous la forme d'éléments sphériques ou cylindriques (50).

8. Rouleau d'appui selon l'une quelconque des revendications précédentes, dans lequel l'anneau externe 30 et/ou les corps roulants (50) présentent respectivement une épaisseur en section transversale entre 20 % et 50 %, de préférence entre 25 % et 40 % du diamètre de l'axe de rouleau (20).

9. Rouleau d'appui selon l'une quelconque des revendications précédentes, comprenant en outre :
un anneau interne disposé entre l'axe de rouleau (20) et les corps roulants (50) pour protéger l'axe de rouleau (20) contre l'usure mécanique.

10. Rouleau d'appui selon la revendication 9, dans lequel l'anneau interne présente une épaisseur maximale en section transversale inférieure à 20 %, de préférence inférieure à 10 % du rayon de l'axe de rouleau (20).

11. Agencement de rouleaux, en particulier pour des installations de laminoirs ou des équipements pour la coulée, le transport ou le dressage de produits métalliques, comprenant :
un rouleau d'appui (10) selon l'une quelconque des revendications précédentes ; et des moyens pour le montage du rouleau d'appui (10) qui comprennent de préférence un bloc d'appui (90).

12. Agencement de rouleaux selon la revendication 11, dans lequel l'axe de rouleau (20) est monté à demeure via les moyens de fixation.

13. Machine à dresser, à couler ou à laminer, comprenant au moins un rouleau d'appui (10) ou un agencement de rouleaux selon l'une quelconque des revendications précédentes.

14. Procédé pour la fabrication d'un rouleau d'appui (10) selon l'une quelconque des revendications 1 à 10, comprenant les étapes dans lesquelles :
on procure un axe de rouleau (20) ;
on incorpore un alésage excentrique (70) dans l'axe de rouleau (20), l'alésage (70) s'étendant essentiellement parallèlement à l'axe médian (A) de l'axe de rouleau (20) ; et
on joint l'axe de rouleau (20), des corps roulants (50) et un anneau externe (30) en forme de cylindre creux au rouleau d'appui (10), les corps roulants (50) formant un palier rotatif entre l'anneau externe (30) et l'axe de rouleau (20).
